# EUROPEAN PATENT SPECIFICATION

(11) **EP 2 671 193 B1**
(45) Date of publication and mention of the grant of the patent: **12.11.2014**
(21) Application number: 12704920.3
(22) Date of filing: 30.01.2012
(51) Int. Cl.: G06K 19/02, G06K 19/077

(54) **LABEL DESIGNED TO PROVIDE INFORMATION ABOUT AN OBJECT ASSOCIATED WITH THE LABEL AND METHOD FOR MAKING THE LABEL**
ETIKETT ZUR BEREITSTELLUNG VON INFORMATIONEN ÜBER EIN MIT DEM ETIKETT ASSOZIIERTES OBJEKT UND HERSTELLUNGSVERFAHREN FÜR DAS ETIKETT
ÉTIQUETTE CONÇUE POUR DONNER DES INFORMATIONS SUR UN OBJET QUI LUI EST ASSOCIÉ ET PROCÉDÉ DE FABRICATION DE CETTE ÉTIQUETTE

(30) Priority: 31.01.2011 IT BO20110037
(43) Date of publication of application: 11.12.2013
(73) Proprietor: Cervellati S.r.L., 40068 San Lazzaro di Savena (Bologna) (IT)
(72) Inventor: CERVELLATI, Stefano, I-40068 San Lazzaro di Savena (Bologna) (IT)
(74) Representative: Fanzini, Valeriano
(86) International application number: PCT/IB2012/050406
(87) International publication number: WO 2012/104765

(56) References cited:
- WO-A1-2008/047436
- US-A1- 2010 243 743

## Description

### Technical Field

This invention relates to a label designed to provide information about an object associated with the label.

### Background Art

RFID (or Radio Frequency Identification) technology is known for automatically identifying objects, animals or persons (AIDC Automatic Identifying and Data Capture) based on the capacity for saving and remotely accessing such data using electronic devices, or transponders, which can respond by communicating the information contained in them when "interrogated".

The RFID label may be active or passive. If it is active, it has one or more antennas for sending the signal to a reader device and may comprise one or more transponders.

If it is passive, it simply contains a microchip which is "energised" when the label passes close to a magnetic reader which emits a radio signal at medium frequencies or several Gigahertz.

The radio frequency activates the microchip and supplies it with the energy needed to respond to the reader, re-transmitting to the latter a signal containing the information saved in the chip.

In short, an RFID device can receive and transmit via radio frequency the information contained in the chip to an RFID reader.

In contrast, active devices are powered by a small internal battery (active RFID devices).

In labels, transponders and antennas are inserted in a support which characterises the specific use of each of these labels and which, in any case, are normally used in items of clothing, or in the form of stickers to be applied on cardboard packages for products, or in credit card-style passes.

In particular, prior art labels, designed to provide information about an object associated with the label, comprise an electronic device or circuit, in particular an RFID device or transponder, enclosed between a first and a second protective layer of the label made of rigid and quite thick polymeric material, so as to guarantee suitable protection for the device or circuit against the stresses and traction which could damage it. However, these prior art protective layers are too rigid and bulky, particularly excessively annoying the user who wears the item of clothing.

US 2010/0243743 A1 discloses a RFID label to be attached to a surface.

### Disclosure of the Invention

This invention proposes a novel solution, alternative to the solutions known up to now, and more specifically, aims to overcome one or more of the above mentioned disadvantages or drawbacks. The invention relates to a label according to claim 1 and a method for making a label according to claim 11.

Advantageously, the label, as well as suitably protecting the internal circuit from external agents, for example during washing of the item of clothing with which it is associated, provides a structure which withstands traction or other stresses so as to prevent the risk of breakage or damage to the internal device or circuit.

### Brief Description of the Drawings

This and other innovative aspects of the invention are set out in the appended claims and the technical features and advantages of the invention are apparent from the detailed description which follows of a non-limiting example embodiment of it with reference to the accompanying drawings, in which:
Figure 1 is a schematic top plan view of a preferred embodiment of the label according to this invention;
Figure 2 is a longitudinal section according to the line II - II in Figure 1 schematically illustrating the preferred embodiment of a label according to this invention;
Figure 3 is a schematic longitudinal section of the various components or layers of this preferred embodiment of the label;
Figure 4 is a schematic top plan view of a preform used in the method for making this label;
Figure 5 is a schematic cross-section of a mould used for making this label.

### Detailed Description of the Preferred Embodiments of the Invention

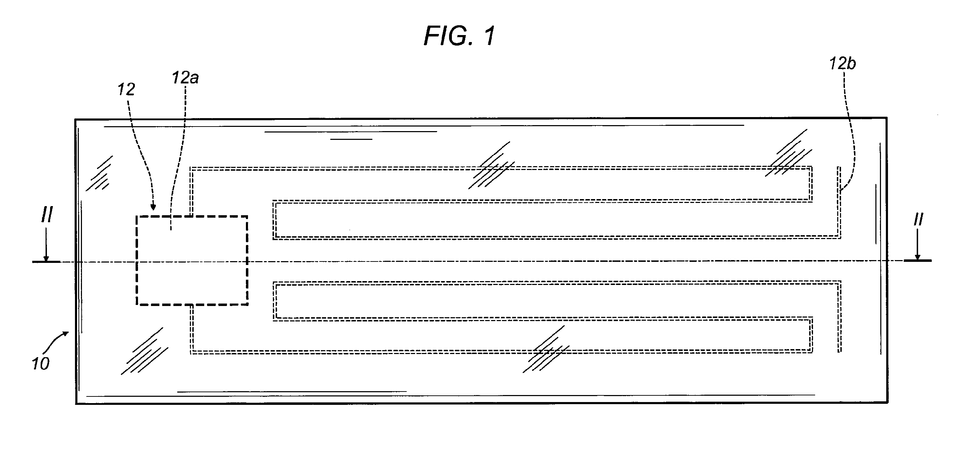

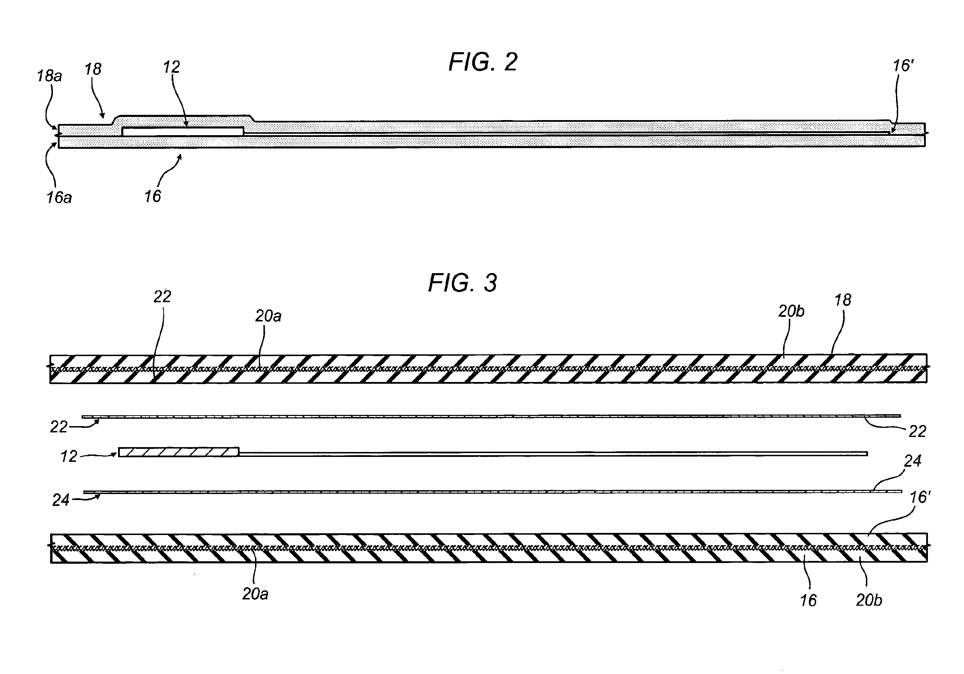

In the accompanying drawings Figures 1 and 2 illustrate a preferred embodiment 10 of a label designed to provide information about an object with which the label can be associated. Said object is preferably an item of clothing or the like.

The label 10 comprises an electronic device or circuit 12, in particular an RFID (Radio Frequency Identification Device) device or a transponder, and comprises, as may be inferred from the accompanying drawings, a chip or microchip 12a and an antenna 12b; the circuit in any case using technology which is well known in the sector and is not illustrated in detail herein.

In this label, the electronic device or circuit 12 is enclosed between a first and a second protective layer 16, 18, which advantageously comprise a core of fabric, schematically illustrated with the label 20a, with a layer of elastomeric material 20b associated with it, as may be inferred from Figure 3.

This protective layer is, advantageously, designed to provide strength, in particular rigidity, against stresses which lengthen the label, in such a way as to prevent potentially damaging traction from being created on the internal circuit, while the layer of elastic material provides impenneability and flexibility, or softness, for the same label.

Preferably, the fabric of the protective layer is made from a yarn chosen from among cotton, cotton and polyester, polyester, nylon, glass fibre and others if necessary.

In turn, the layer of polyester to be associated with the fabric is preferably made of material chosen from among: NBR, FKM, CR, EPDM, silicone, fluorosilicone (FVMQ), epichlorohydrin (CO), HNBR and others if necessary.

Advantageously, the respective protective layer 16, 18 is adherent to the circuit or device 12, in such a way as to prevent the formation of air bubbles inside the circuit, which could cause label stiffening and damage to the electronic circuit.

For that purpose, as may be inferred from Figure 3, a respective adhesive layer 22, 24 is provided on each face, upper and lower, of the device or circuit 12, between the latter and the respective protective layer 16, 18.

Preferably, the respective adhesive layer 22, 24 is in the form of adhesive polyester.

Moreover, as illustrated, in this label the protective layers 16, 18 comprise respective peripheral edges which adhere to each other and extend outside the electronic circuit or device 12 and seal the inner zone in which the circuit is housed.

Moreover, preferably, the respective protective layer 16, 18 is in the form of a layer of vulcanized material.

An advantageous method for making a label of the type described above is illustrated with reference to the subsequent Figures 3 to 5.

This method for making a corresponding label therefore comprises using layers and components of the type referred to above, and in particular comprises using protective layers 16, 18 comprising a core of fabric 20a with a layer of elastomeric material 20b associated with it, which are made of suitably selected material, as indicated above.

In particular, according to the method, an electronic circuit device is used, enclosed between the protective layers 16 and 18 and an RFID device or transponder, in particular as referred to above comprising a respective chip or microchip 12a and an antenna circuit 12b.

According to the method, a preform is obtained which comprises a first and a second protective layer 16, 18 with the device or circuit 12 interposed between the two.

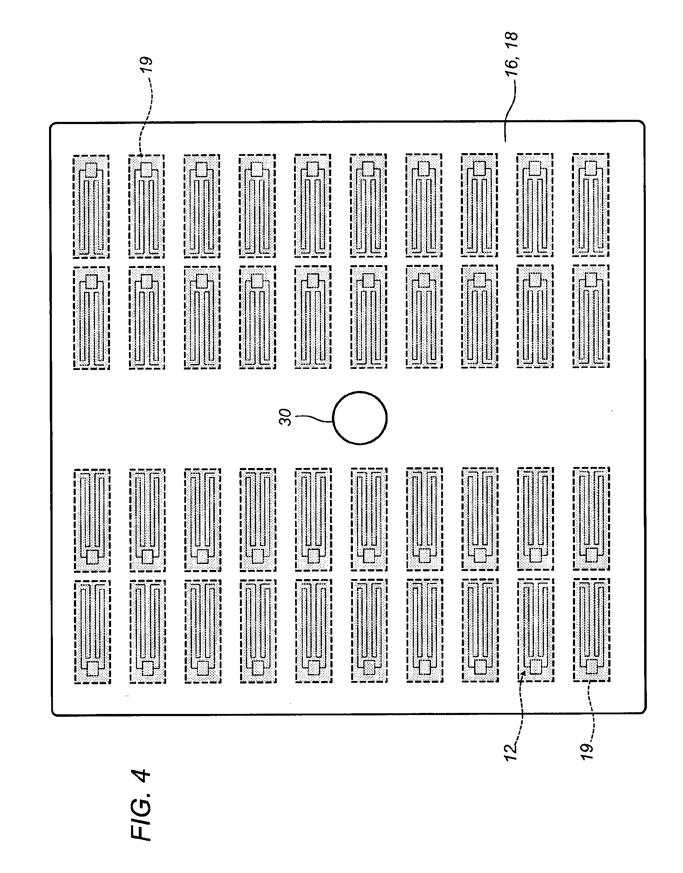

In particular, one or more devices or circuits 12 are positioned on a respective protective layer 16 and then associated with a second protective layer 18 on top of the first protective layer 16 supporting the one or more circuits 12, to obtain, if using two or more circuits or devices, a preform of the type illustrated in Figure 4.

According to the method, the protective layers, in particular at the peripheral zones, or edges, outside the respective device 12, are joined together.

Moreover, according to this method the protective layers 16, 18 are suitably vulcanized.

In practice, the protective layers 16, 18 are compressed against each other with the device and circuit 12 interposed between the two.

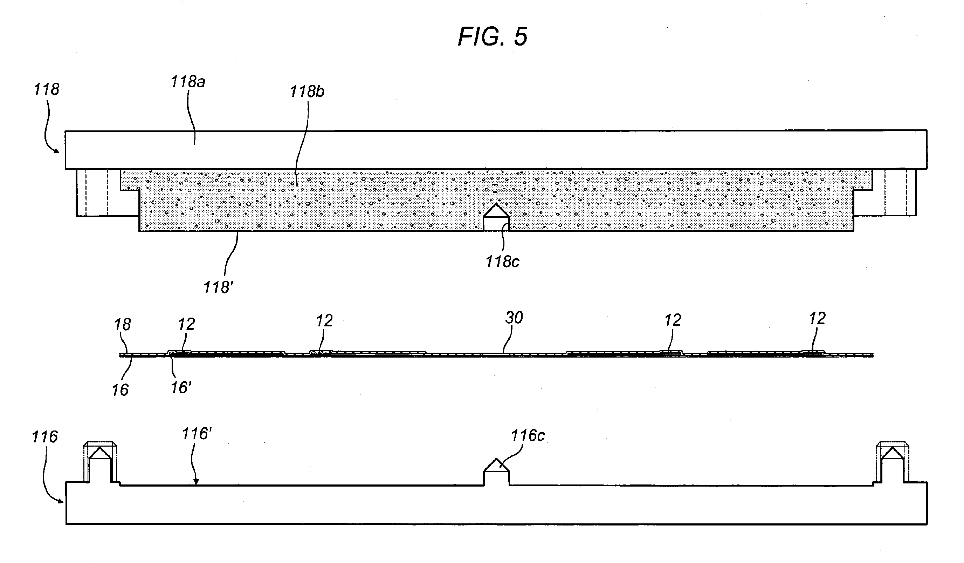

In particular, the protective layers 16, 18 are compressed in a suitable and advantageous mould, schematically illustrated in Figure 5, having a respective heated first and second half-mould 116, 118, for example inserted in a shared press for moulding rubber or another thermosetting material.

In particular, the protective layers 16, 18 are heated to a temperature preferably of between 145°C and 190°C.

In particular, the protective layers 16, 18 are pressed and heated for an interval of time preferably of between 2 minutes and 5 minutes.

In particular, a first half-mould 116, comprising or forming an engagement surface for the respective protective layer 16, is made of a hard material, preferably steel or aluminium. The half-mould 116 made of metal forms, in particular, an upper engagement surface 116' for the protective layer 16 for engagement or support.

Moreover, a second half-mould 118, comprising or forming an engagement surface for the respective protective layer 18 is, in turn, made of or comprises a respective portion made of elastically compliant material, preferably silicone. For that purpose, there is a steel plate 118a supporting a silicone pad 118b, forming the engagement surface 118' for the layer 18 of the preform which is inserted between the half-moulds 116, 118.

Said metal material of the lower half-mould 116 is an excellent heat conductor and facilitates the vulcanizing operation.

In turn, the silicone of the upper half-mould 118, as well as being compliant allows sufficient heating of the corresponding layer 18, to result in vulcanization of the corresponding protective layer 18.

In particular, as may be inferred from Figure 5, the preform, obtained by joining the layers 16, 18 to the circuit or device 12, comprises a layer 16 on which the circuit or device 12 rests, protruding from the respective face, in particular a flat supporting face 16' of the layer 16. Moreover, the preform comprises a covering layer 18 for the circuit and device 12 which rests on the circuit 12 and whose edge peripheral to the circuit 12 projects towards and in contact with the upper surface 16' of the lower protective layer 16, on which the device or circuit 20 rests.

Advantageously, as may be inferred from Figure 5, the preform constituted in that way is placed between the half-moulds 116, 118 of the mould, with the upper side or side from which the device circuit 12 protrudes, facing towards the engagement surface made of elastically compliant material 118b.

As already indicated, according to the method a preform is produced in which the respective layer 16, 18 is rendered adherent to the electronic device or circuit 12.

For that purpose, a respective adhesive layer 22, 24 is positioned on one or both sides of the circuit or device 12.

In particular, preferably, the adhesive layer 22, 24 is in the form of an adhesive polyester.

Starting with the sheet containing a plurality of circuits, portions of the protective layers 16, 18 each containing a respective device or circuit are separated from each other to form a corresponding label 10, according to the respective dashed cutting or die cutting line 19.

As can be inferred from Figures 4 and 5, the preform comprises means 30 for positioning it inside the mould.

In particular, the preform comprises a hole 30, in particular a central hole, formed by a corresponding edge, in particular a circular edge, which allows the insertion of and peripherally engages with a respective pin 116c, in particular extending from the engagement surface 116' of the lower half-mould 116, the pin being designed to be inserted, or couple, in a corresponding cavity 118c, shaped to match the pin, and made in the half-mould 118, in particular in the silicone pad 118b of the upper half-mould 118.

This label and method are, in any case, better understood with reference to the following example embodiment.

### EXAMPLE EMBODIMENT

According to a preferred embodiment the label comprises:
- a circuit or device 12 of the type illustrated above, on both sides of which a layer of adhesive polyester is deposited;
- two sheets, or layers 16, 18, of polyester cotton, 0.15 mm thick, spread or calendered with a mixture of rubber based on epichlorohydrin (CO), or NBR, or NBR/ECO or FKM.

The sheets, or protective layers 16, 18, of rubberized fabric must be raw or alternatively semi-vulcanized with a level of vulcanization of between 70% and 90%.

The first step of the method for making this label comprises attaching the circuit or device on a sheet of rubberized fabric 16.

Then, the second sheet 18 of rubberized fabric is applied on the other side of the device 12, taking care not to leave air bubbles in the adhesive zone.

The two layers 16, 18 of rubberized fabric, thus associated (containing the circuit or device 12), are cut into preforms having predetermined dimensions suitable for insertion in the vulcanization mould.

At this point, the preform is vulcanized by moulding in a heated press, so that the two sheets, or layers 16, 18, of rubberized fabric are vulcanized and completely welded together, with the circuit or device 12 embedded and sealed inside them.

Finally, if, as in this case, in the preform there are two or more circuits or devices, next to one another, the preform is cut in such a way as to separate the various circuits or devices. The cutting operation may be carried out in the most diverse ways, for example by means of strip cutting, die cutting, punching, laser cutting, water or manual cutting.

In the moulding press the two thin layers of rubberized fabric 16, 18 are welded together without crushing and breaking the device 12.

The pressure needed to vulcanize the rubberized sheets of fabric 16, 18 together must be constant and equal at all points.

For that purpose, a suitable pressure is applied for a time equal to 4 minutes, and preferably between 2 and 5 minutes, at a temperature equal to 170°C and preferably between 145°C and 190°C.

Advantageously, one half-mould with a rigid side is used (made of steel or aluminium, or materials which are good heat conductors), and one half-mould having a moulded silicone pad of medium - low hardness (between 40 Sh°A and 60 Sh°A), and thickness between 4 and 10 mm.

Said silicone surface 118b is sufficiently able to transmit the heat received from the heated surface 118a of the half-mould 16, 18, to effectively compress the rubberized fabrics 16, 18, so that they are vulcanized and welded together, and causes the device to adhere without leaving air inside and without crushing or breaking the device 12.

Any air residues which may remain are negligible in terms of quantity for future uses of the device.

Advantageously, in a subsequent step of the method, the preform (that is to say, the two sheets of rubberized fabric with the device inside, before vulcanization) is placed in the mould in such a way that the chip is positioned on the side of the silicone half-mould 118b, so that during moulding the circuit 12 is not damaged.

Advantageously, rubberized fabrics may be used which consist of a fabric that is completely or highly compacted, guaranteeing that the device will not be subject to deformations during moulding.

Preferably, in this label a passive or read-only type of device or circuit is used, comprising a chip and a copper wire antenna which are inserted on a support comprising two layers enclosing the device in adhesive polyester.

However, the use of passive devices does not limit the scope of the invention, nor does the shape or structure of said device.

Advantageously, in this way it is possible to insert and seal an electronic device between two sheets of rubberized fabric which are vulcanized together, in such a way that the device remains protected and completely isolated from the outside environment.

The casing formed by the rubberized fabric made around the device is larger than the device, thus leaving a border of only rubberized fabric along the entire perimeter of the device. Said border may be used for various operations/processing without making potentially damaging contact with the device. For example, thanks to the peripheral edge without the circuit or device in it, the label can be sewn or glued onto another fabric or plastic support.

In particular, the label may be sewn or fixed using various methods to products of various types, including textile items, rolls of fabric, items of clothing and accessories (bags, hats, scarves, uniforms, and other), sheets, linen in general and leather goods.

This label acts as an identification label and is designed to follow the product on which it is applied during its entire production cycle or entire useful life.

In particular, this label is designed to meet the requirements of those products which - during production or during their useful life - must be washed, undergo chemical treatments and/or come into contact with corrosive agents, or be dried, ironed, subjected to mechanical stresses and/or exposed to high temperatures.

By embedding the device in the layers 16, 18 of rubberized fabric it is possible to guarantee the integrity of the device, withstanding mechanical stresses. In fact, the structure of the protective layers made of rubberized fabric does not allow lengthening or deformations which may be damaging to the components of the device 12.

The rubberized part, or elastomeric layer of the protective layer, in turn is designed to protect the device from the outside environment, that is to say, from direct contact with various types of agents or direct exposure to temperatures which could damage it.

Moreover, the structure of this protective layer made of rubberized fabric means that - even if subjected to mechanical stresses (if crushed, bent, compressed or other) - the device and its casing 16, 18 always return to their original shape established during the vulcanization step.

It shall be understood that the rubberized fabrics used for this label may be formed by combining a plurality of fabrics and elastomers.

Inserting the device between two very thin sheets of rubberized fabric 16, 18 (minimum 0.15 mm) allows the creation of a finished product which is extremely slim and flexible.

For example, where the device is present, this label can reach a thickness of 0.7 mm, while where the device is absent and there are only the two sheets of rubberized fabric, the thickness may be 0.3 mm.

Minimum thickness combined with flexibility minimise the possible annoyance which the device may cause the user of the product on which it is applied (for example, if it is applied as a label on a jacket or a sheet), and also minimises the possibility that the device is an obstacle to processing in respective plants or machines.

Therefore, a label was prepared, comprising an electronic device or circuit which is protected by a casing made of rubberized fabric which is particularly slim and flexible and which has a minimal thickness.

Therefore, a label was prepared, comprising an electronic device or circuit which is protected by a casing made of rubberized fabric which guarantees protection of the device from chemical, corrosive or in any case potentially harmful agents, which the spread rubbers can in any case withstand.

Therefore, a label was prepared, comprising an electronic device or circuit which is protected by a casing made of rubberized fabric which has significant elasticity and flexibility and at the same time sufficient mechanical strength.

Therefore, a label was prepared, comprising an electronic device or circuit which is protected by a casing made of rubberized fabric which provides resistance to high temperatures and total permeability to gases and water.

In particular, it would also be possible to imagine the label being made to withstand perchloroethylene.

The invention described above is susceptible of industrial application. It would be obvious to one skilled in the art that several changes and modifications can be made to the invention without departing from the spirit and scope of the invention, described in depth above. In particular, one skilled in the art could easily imagine further preferred embodiments of the invention comprising one or more of the features described herein. It will also be understood that all the details of the invention may be substituted by technically equivalent elements.

## Claims

1. A label (10) designed to provide information about an object associated with the label, the label comprising an electronic device or circuit (12), enclosed between a first and a second protective layer (16, 18) of the label wherein at least one of the protective layers (16, 18) comprises a layer of elastomeric material (20b), **characterised in that** at least one of the protective layers (16, 18) comprises a core of fabric (20a) associated with the layer of elastomeric material (20b).

2. The label according to claim 1, **characterised in that** both the protective layers (16, 18) comprise a core of fabric (20a) with a layer of elastomeric material (20b) associated with it.

3. The label according to either of the preceding claims, **characterised in that** the fabric is made from a yarn chosen from among cotton, cotton and polyester, polyester, nylon, aramid fibres, nomex and glass fibre.

4. The label according to any of the preceding claims, **characterised in that** the elastomeric layer is made of a material chosen from among NBR, FKM, CR, EPDM, silicone, fluorosilicone (FVMQ), epichlorohydrin (CO) and HNBR.

5. The label according to any of the preceding claims, **characterised in that** the respective protective layer (16, 18) is adherent to the device or circuit (12).

6. The label according to any of the preceding claims, **characterised in that** it has an adhesive layer (22, 24) on one side of the device or circuit or on both sides of the device or circuit.

7. The label according to claim 6, **characterised in that** the respective adhesive layer is in the form of adhesive polyester.

8. The label according to any of the preceding claims, **characterised in that** the electronic device or circuit is an RFID device or transponder.

9. The label according to any of the preceding claims, **characterised in that** the protective layers (16, 18) have respective peripheral edges (16a, 18a) for mutual adhesion.

10. The label according to any of the preceding claims, **characterised in that** the respective protective layer (16, 18) is in the form of a layer of vulcanized material.

11. A method for making a label (10) designed to provide information about an object associated with the label, the latter containing an electronic device or circuit (12), preferably defined by an RFID device or transponder, enclosed between a first and a second protective layer (16, 18) of the label, wherein use is made of at least one protective layer (16, 18) comprising a layer of elastomeric material (20b) **characterised in that** at least one of the protective layers (16, 18) comprises a core of fabric (20a) associated with the layer of elastomeric material (20b).

12. The method according to claim 11, **characterised in that** both the protective layers (16, 18) comprise a core of fabric (20a) with a layer of elastomeric material (20b) associated with it.

13. The method according to claim 11 or 12, **characterised in that** the fabric is made from a yarn chosen from among cotton, cotton and polyester, polyester, nylon, aramid fibres, nomex and glass fibre; and **in that** the elastomeric layer is made of a material chosen from among NBR, FKM, CR, EPDM, silicone, fluorosilicone (FVMQ), epichlorohydrin (CO) and HNBR.

14. The method according to any of the claims from 11 to 13, **characterised in that** the protective layers (16, 18) are vulcanized in a suitable mould having respective first and second heated half-moulds (116, 118); **in that** the first half-mould (116) forming an engagement surface for the respective protective layer (16) is made of a hard material, preferably steel or aluminium; and **in that** the second half-mould (118) forming an engagement surface for the respective protective layer (18) is made of an elastically compliant material, preferably silicone.

15. The method according to claim 14, **characterised in that** the preform comprises a supporting layer (16) for the circuit or device (12) which protrudes from the respective supporting face (16') of the layer (16) and a covering layer (18) for the same circuit or device (12); the preform being positioned between the half-moulds (116, 118) of the mould with the side from which the circuit or device (12) protrudes facing the engagement surface (118a) made of elastically compliant material.

## Patentansprüche

1. Etikett (10) zur Bereitstellung von Informationen über ein mit dem Etikett assoziiertes Objekt, wobei das Etikett eine elektronische Vorrichtung oder einen Kreis (12) umfasst, eingeschlossen zwischen einer ersten und einer zweiten Schutzschicht (16, 18) des Etiketts, wobei mindestens eine der Schutzschichten (16, 18) eine Schicht aus Elastomermaterial (20b) umfasst, **dadurch gekennzeichnet, dass** mindestens eine der Schutzschichten (16, 18) einen Gewebekern (20a) umfasst, assoziiert mit der Schicht aus Elastomermaterial (20b).

2. Etikett nach Anspruch 1, **dadurch gekennzeichnet, dass** beide Schutzschichten (16, 18) einen Gewebekern (20a) mit einer Schicht aus Elastomermaterial (20b), die damit assoziiert ist, umfassen.

3. Etikett nach einem der vorhergehenden Ansprüche, **dadurch gekennzeichnet, dass** das Gewebe aus einem Garn besteht, ausgewählt aus Baumwolle, Baumwolle und Polyester, Polyester, Nylon, Aramidfasern, Nomex und Glasfaser.

4. Etikett nach einem der vorhergehenden Ansprüche, **dadurch gekennzeichnet, dass** die Elastomerschicht aus einem Material besteht, ausgewählt aus NBR, FKM, CR, EPDM, Silikon, Fluorsilikon (FVMQ), Epychlorhydrin (CO) und HNBR.

5. Etikett nach einem der vorhergehenden Ansprüche, **dadurch gekennzeichnet, dass** die jeweilige Schutzschicht (16, 18) an der Vorrichtung oder dem Kreis (12) haftet.

6. Etikett nach einem der vorhergehenden Ansprüche, **dadurch gekennzeichnet, dass** sie eine Haftschicht (22, 24) auf einer Seite der Vorrichtung oder des Kreises oder auf beiden Seiten der Vorrichtung oder des Kreises aufweist.

7. Etikett nach Anspruch 6, **dadurch gekennzeichnet, dass** die jeweilige Haftschicht die Form von haftendem Polyester aufweist.

8. Etikett nach einem der vorhergehenden Ansprüche, **dadurch gekennzeichnet, dass** es sich bei der elektronischen Vorrichtung oder dem Kreis um eine RFID-Vorrichtung oder einen Transponder handelt.

9. Etikett nach einem der vorhergehenden Ansprüche, **dadurch gekennzeichnet, dass** die Schutzschichten (16, 18) jeweilige Umfangskanten (16a, 18a) für die gegenseitige Haftung aufweisen.

10. Etikett nach einem der vorhergehenden Ansprüche, **dadurch gekennzeichnet, dass** die jeweilige Schutzschicht (16, 18) die Form einer Schicht aus vulkanisiertem Material aufweist.

11. Verfahren zur Herstellung eines Etiketts (10) zur Bereitstellung von Informationen über ein mit dem Etikett assoziiertes Objekt, wobei Letzteres eine elektronische Vorrichtung oder einen Kreis (12) umfasst, vorzugsweise definiert von einer RFID-Vorrichtung oder einem Transponder, eingeschlossen zwischen einer ersten und einer zweiten Schutzschicht (16, 18) des Etiketts, wobei mindestens eine Schutzschicht (16, 18) genutzt wird, umfassend eine Schicht aus Elastomermaterial (20b), **dadurch gekennzeichnet, dass** mindestens eine der Schutzschichten (16, 18) einen Gewebekern (20a) umfasst, assoziiert mit der Schicht aus Elastomermaterial (20b).

12. Verfahren nach Anspruch 11, **dadurch gekennzeichnet, dass** beide Schutzschichten (16, 18) einen Gewebekern (20a) mit einer Schicht aus Elastomermaterial (20b), die damit assoziiert ist, umfassen.

13. Verfahren nach Anspruch 11 oder 12, **dadurch gekennzeichnet, dass** das Gewebe aus einem Garn besteht, ausgewählt aus Baumwolle, Baumwolle und Polyester, Polyester, Nylon, Aramidfasern, Nomex und Glasfaser, und dadurch, dass die Elastomerschicht aus einem Material besteht, ausgewählt aus NBR, FKM, CR, EPDM, Silikon, Fluorsilikon (FVMQ), Epychlorhydrin (CO) und HNBR.

14. Verfahren nach einem der Ansprüche 11 bis 13, **dadurch gekennzeichnet, dass** die Schutzschichten (16, 18) in einer geeigneten Form vulkanisiert sind, aufweisend jeweilige erste und zweite erhitzte Halbformen (116, 118), und dadurch, dass die erste Halbform (116) eine Eingriffoberfläche für die jeweilige Schutzschicht (16) bildet und aus einem harten Material besteht, vorzugsweise aus Stahl oder Aluminium, und dadurch, dass die zweite Halbform (118) eine Eingriffoberfläche für die jeweilige Schutzschicht (18) bildet und aus einem elastischen nachgiebigen Material besteht, vorzugsweise Silikon.

15. Verfahren nach Anspruch 14, **dadurch gekennzeichnet, dass** die Vorform eine Stützschicht (16) für den Kreis oder die Vorrichtung (12) umfasst, die aus der jeweiligen Stützseite (16') der Schicht (16) hervorsteht, und eine Deckschicht (18) für denselben Kreis oder dieselbe Vorrichtung (12), wobei die Vorform zwischen den Halbformen (116, 118) der Form positioniert ist, wobei die Seite, aus der der Kreis oder die Vorrichtung (12) hervorsteht, der Eingriffoberfläche (18a), bestehend aus elastisch nachgiebigem Material, zugewandt ist.

## Revendications

1. Etiquette (10) conçue pour donner des informations sur un objet qui lui est associé, l'étiquette comprenant un dispositif électronique ou circuit (12), enfermé entre une première et une seconde couche protectrice (16, 18) de l'étiquette, dans laquelle au moins une des couches protectrices (16, 18) comprend une couche d'élastomère (20b), **caractérisée en ce qu'**au moins une des couches protectrices (16, 18) comprend une trame de tissu (20a) associée à la couche d'élastomère (20b).

2. Etiquette selon la revendication 1, **caractérisée en ce que** les deux couches protectrices (16, 18) comprennent une trame de tissu (20a) avec une couche d'élastomère (20b) qui lui est associée.

3. Etiquette selon l'une quelconque des revendications précédentes, **caractérisée en ce que** le tissu est fabriqué à partir d'un fil textile choisi parmi le coton, le coton et le polyester, le polyester, le nylon, les fibres aramides, la fibre de verre et Nomex.

4. Etiquette selon l'une quelconque des revendications précédentes, **caractérisée en ce que** la couche élastomère est fabriquée dans une matière choisie parmi le NBR, le FKM, le CR, l'EPDM, la silicone, la silicone fluorée (FVMQ), l'épichlorhydrine (CO) et le caoutchouc butadiène-acrylonitrile hydrogéné.

5. Etiquette selon l'une quelconque des revendications précédentes, **caractérisée en ce que** la couche protectrice correspondante (16, 18) adhère au dispositif ou circuit (12).

6. Etiquette selon l'une quelconque des revendications précédentes, **caractérisée en ce qu'**elle possède une couche adhésive (22, 24) sur un côté du dispositif ou circuit ou sur les deux côtés du dispositif ou circuit.

7. Etiquette selon la revendication 6, **caractérisée en ce que** la couche adhésive correspondante se présente sous la forme d'un polyester adhésif.

8. Etiquette selon l'une quelconque des revendications précédentes, **caractérisée en ce que** le dispositif électronique ou circuit est un dispositif ou transpondeur RFID (d'identification par radiofréquence).

9. Etiquette selon l'une quelconque des revendications précédentes, **caractérisée en ce que** les couches protectrices (16, 18) possèdent des bords périphériques correspondants (16a, 18a) pour adhérer mutuellement.

10. Etiquette selon l'une quelconque des revendications précédentes, **caractérisée en ce que** la couche protectrice correspondante (16, 18) se présente sous la forme d'une couche de produit vulcanisé.

11. Procédé de fabrication d'une étiquette (10) conçue pour donner des informations sur un objet qui lui est associé, cette dernière contenant un dispositif électronique ou circuit (12), de préférence défini par un dispositif ou transpondeur RFID enfermé entre une première et une seconde couche protectrice (16, 18) de l'étiquette, dans laquelle l'utilisation est faite d'au moins une couche protectrice (16, 18) comprenant une couche d'élastomère (20b), **caractérisé en ce qu'**au moins une des couches protectrices (16, 18) comprend une trame de tissu (20a) associée à la couche d'élastomère (20b).

12. Procédé selon la revendication 11, **caractérisé en ce que** les deux couches protectrices (16, 18) comprennent une trame de tissu (20a) avec une couche d'élastomère (20b) qui lui est associée.

13. Procédé selon les revendications 11 ou 12, **caractérisé en ce que** le tissu est fabriqué à partir d'un fil textile choisi parmi le coton, le coton et le polyester, le polyester, le nylon, les fibres aramides, la fibre de verre et Nomex; et **en ce que** la couche élastomère est fabriquée dans une matière choisie parmi le NBR, le FKM, le CR, l'EPDM, la silicone, la silicone fluorée (FVMQ), l'épichlorhydrine (CO) et le caoutchouc butadiène-acrylonitrile hydrogéné.

14. Procédé selon l'une quelconque des revendications de 11 à 13, **caractérisé en ce que** les couches protectrices (16, 18) sont vulcanisées dans un moule adapté ayant des premier et second demi-moule chauffés respectifs (116, 118); **caractérisé en ce que** le premier demi-moule (116) formant une surface d'engagement pour la couche protectrice correspondante (16) est fabriqué dans un matériau dur, de préférence de l'acier ou de l'aluminium; et **en ce que** le second demi-moule moule (118) formant une surface d'engagement pour la couche protectrice correspondante (18) est fabriqué dans un matériau élastiquement souple, de préférence de la silicone.

15. Procédé selon la revendication 14, **caractérisé en ce que** la préforme comprend une couche de support (16) pour le circuit ou dispositif (12) qui dépasse de la face de support respective (16') de la couche (16) et une couche de protection (18) pour le même circuit ou dispositif (12); la préforme étant positionnée entre les demi-moules (116, 118) du moule avec le côté duquel le circuit ou dispositif (12) dépasse face à la surface d'engagement (118a) fabriquée en matière élastiquement souple.
